# EUROPEAN PATENT SPECIFICATION

(11) **EP 2 854 610 B1**
(45) Date of publication and mention of the grant of the patent: **23.06.2021**
(21) Application number: 13716049.5
(22) Date of filing: 15.02.2013
(51) Int. Cl.: A47J 36/16, A47J 27/00, A47J 27/14

(54) **AUTOMATIC FOOD PREPARATION DEVICE**
AUTOMATISCHE NAHRUNGSMITTELZUBEREITUNGSVORRICHTUNG
DISPOSITIF DE PRÉPARATION D'ALIMENTS AUTOMATIQUE

(30) Priority: 15.02.2012 TR 201201695
(43) Date of publication of application: 08.04.2015
(73) Proprietor: Ozgul, Volkan, Istanbul (TR)
(72) Inventor: Ozgul, Volkan, Istanbul (TR)
(74) Representative: Mutlu, Aydin
(86) International application number: PCT/IB2013/051234
(87) International publication number: WO 2013/121386

(56) References cited:
- DE-A1- 19 916 904
- US-A- 4 503 502
- US-A- 4 649 810
- US-A- 5 819 636

## Description

### Fileld of the invention

This invention pertains to a device which successively dispenses the ingredients and liquid into the cooking chamber and prepares food in full automation.

### Prior Art

Food preparation operation has become a burden in this day and age. Especially individuals who spend most of the day working, do not want to pass their limited time by preparing food which they could spare for themselves. Consequentially, this results in people tending to respectively unhealthy fast food.

Many products have been introduced for preparing food automatically, but none of them have succeeded in establishing a market presence. One of the most important resasons for this is that these products are not suitable to all cooking techniques or all kinds of food and that they require intervention during food preparation.

In the United Nations patent document numbered US6539841 which is a known application of the technique, an automatic food preparation device is mentioned. The device comprises a vertical stand which comprises a cooling motor. In the front of the stand at the center, a prop supports a case which comprises cooling and processing chambers. The heating layer is integrated into the stand, right below the case. However, in the food preparation device mentioned in the document numbered US6539841 neither an element which determines whether the food is cooked or not, nor a system that decides when to take the liquid into the cooking chamber exists. These operations are performed manually by the user.

In the international patent document numbered WO2010095956 which is another document regarding the conventional application of the technique, a cooking device and method is mentioned. The device comprises a cartridge for dispensing of meal ingredients according to a predetermined cooking program and a cooking vessel for the controlled automated cooking of the dispensed meal ingredients. The cartridge is used for retaining and dispensing of ingredients of a meal or at least a part of a meal. The cartridge comprises at least one compartment segregated from one another by dividers or walls, and a base portion to the compartments to, together, define a receptacle, wherein the compartments and the base portion are engageable with one another yet are moveable relative to each other. The cooking device comprises a dispenser system in communication with the vessel, the dispenser system configured for receiving of meal ingredients to be dispensed into the vessel for cooking at preferred or predetermined times during a cooking program. However, the food preparation device mentioned in the document numbered WO2010095956 does not comprise a system which determines whether the food is cooked or not and the cooking operation is ended by the user.

In the international patent document numbered US4649810 which is another document regarding the conventional application of the technique, a microcomputer-controlled cooking apparatus for automatically preparing culinary dishes is mentioned. The constituent ingredients of a particular dish are loaded into a compartmentalized carousel, which is mounted on the cooking apparatus. The apparatus includes a memory for storing one or more recipe programs. The recipe program specifies schedules for dispensing the ingredients from the carousel into a cooking vessel, for heating the vessel (either covered or uncovered), and for stirring the contents of the vessel. These operations are performed automatically under control of the microcomputer. However, the said apparatus can not automatically detect whether the food is cooked or not.

### Summary of the Invention

The objective of the present invention is to realize an automatic food preparation device which makes food preparation possible by using one or more of all cooking methods such as frying, sauteing, steaming, escalloping, sweating, cooking in a pressure cooker, poele, bouilli, poaching.

Another objective of the present invention is to realize an automatic food preparation device which successively dispenses the ingredients placed in the ingredient chamber to the cooking chamber.

A further objective of the present invention is to realize an automatic food preparation device which automatically brings the consistency of the food to desired values.

Yet another objective of the present invention is to realize an automatic food preparation device which detects that the food is cooked and ends the food preparation operation.

Yet another objective of the present invention is to realize an automatic food preparation device which provides the steam generated during food preparation be liquefied and returned to the cooking chamber and thus prevents vitamin and mineral loss in the food.

Yet another objective of the present invention is to realize an automatic food preparation device which discharges the gases generated while roasting or cooking (foods like cauliflower, cabbage, celery) and prevents bad smell and bad taste from being generated on the food.

Yet another objective of the present invention is to realize an automatic food preparation device which can move the basket upwards or downwards for mixing with a single motor, ingredient dispensing, controlling the cooking detection sensor, controlling the liquid valve, controlling the steam and condensation, controlling food consistency, frying and boiling.

Yet another objective of the present invention is to realize an automatic food preparation device which prevents the ingredients from accumulating and lumping in front of mixing blades during mixing and provides homogeneous mixing.

Yet another objective of the present invention is to realize an automatic food preparation device which prevents the ingredients from getting stuck in between the mixing blades and cooking chamber during mixing.

Yet another objective of the present invention is to realize an automatic food preparation device which transmits data to the information to the electronic system regarding consistency of the ingredient by measuring the temperature of the ingredient during roasting and whether it has reached the desired consistency or not.

### Detailed Description of the Invention

The automatic food preparation device realized to achieve the objective of the present invention is illustrated in the figures attached wherein;
**Figure-1** is the lateral view of the automatic food preparation device.
**Figure-2** is the cross-section view of the cooking chamber.
**Figure-3** is the cross-section view of the automatic food preparation device while the ventilation pipe is attached.
**Figure-4** is the cross-section view of the ingredient inlet unit.
**Figure-5** is the cross-section view of the ingredient inlet unit while the blades are not attached.
**Figure-6** is the cross-section view illustrating interlocking of the motor, mixing unit and secondary blades.
**Figure-7** is the cross-section view of the gas control system.
**Figure-8** is another cross-section view of the gas control unit.
**Figure-9** is the cross-section view while ventilation pipe is attached to the ingredient inlet unit.
**Figure-10** is the cross-section view while the frying and boiling basket is at the bottom of the cooking chamber.
**Figure-11** is the lateral view of the mechanical liquid inlet valve.
**Figure-12** is the lateral view of the magnetic liquid inlet valve.
**Figure-13** is the frontal view of the limit sensor.
**Figure-14** is the view of the decomposed cooking detection sensor.

All the components and portions in the figures have been individually numbered, where the numbers refer to the following.
**1.** Food preparation device
**2.** Cooking chamber
   21. Ridge
**3.** Motor
**4.** Geared wheel
   4a. Lower geared wheel
   4b. Upper geared wheel
**5.** Ventilation pipe
**6.** Fan
**7.** Liquid storage
**8.** Liquid inlet valve
**9.** Limit Sensor
**10.** Temperature sensor
**11.** Ingredient inlet unit
   111. Ingredient chamber
   111a. Cell
   112. Main blade
   113. Secondary blade
   114. Ingredient inlet opening
   115. Ingredient shaft
**12.** Mixing unit
   121. Mixing blade
   122. Mixing shaft
   123. Consistency detection panel
**13.** Gas control system
   131. Steam valve
   132. Ventilation opening
   133. Condensation surface
   134. Interlocking rim
   135. Cooling window
**14.** Cooking detection sensor (CDS)
**15.** Reducer
**17.** Frying and boiling basket

An automatic food preparation device (1) comprises;
- At least one cooking chamber (2),
- At least one motor (3),
- At least one reducer (15) that alters the torque and speed rates generated in the motor (3),
- At least one geared wheel (4) which provides unidirectional power transfer,
- At least one limit Sensor (9),
- At least one temperature sensor (10),
- At least one ingredient inlet unit (11) where the food ingredients are kept and which provides the same be successively dispensed into the cooking chamber, said ingredient inlet unit (11) having at least one ingredient chamber (111) where the ingredients are placed into,
- At least one main blade (112) which provides the location of the ingredients in the ingredient inlet unit (11),
- At least one secondary blade (113) which provides the ingredients be kept segregated from one another in the ingredient chamber (111),
- At least one ingredient inlet opening (114) which provides the ingredients be dispensed from the ingredient inlet unit (11) into the cooking chamber (2),
- At least one ingredient shaft (115) where the main blade (112) and secondary blades (113) are fastened, which provides the main blade (112) and secondary blades (113) be rotated,
- At least one mixing unit (12) which provides the ingredients in the cooking chamber (2) be mixed,
- At least one mixing blade (121) which provides the ingredients in the cooking chamber (2) be intermixed by hitting the ingredients,
- At least one mixing shaft (122) whereto the mixing blades (121) are attached, which provides the mixing blades (121) be rotated in the cooking chamber (2), and **characterized in that;**
- At least one gas control system (13) which provides the gases and/or steam generated during cooking be discharged from the cooking chamber (2) and/or be returned to the cooking chamber (2) after being condensed,
- At least one steam valve (131) which provides the gases generated in the cooking chamber (2) be kept in the cooking chamber (2),
- At least one condensation surface (133) which provides the steam generated in the cooking chamber (2) while cooking be condensed and returned to the cooking chamber (2),
- At least one cooling window (135) which provides air suction be made from the external environment and the condensation surface (133) be cooled by the air sucked from outside contacting the condensation surface (133), and
- At least one control unit which controls elements such as the motor (3) and liquid inlet valve (8) after evaluating data obtained from the temperature sensor (10).

In the food preparation device (1) which is the subject of the invention, the cooking chamber (2) is the section where the food ingredients are cooked. In the preferred embodiment of the invention the cooking chamber (2) has a cylindrical form. In another embodiment of the invention, there is at least one ridge (21) on the walls of the cooking chamber (2) which drains the liquid flow generated during mixing of the food and helps mixing.

The motor provides the necessary actuation for operations be performed, such as mixing the ingredients in the cooking chamber (2) or dispensing the ingredients in the ingredient chamber (11) into the cooking chamber (2). The rotation speed of the motor (3) is adjusted by the control unit. In the preferred embodiments of the invention the motor (3) can rotate in both directions, if required its revolution or torque can be adjusted and it works electrically. The geared wheel (4) comprises the upper geared wheel (4b) which interlocks with the reducer (15) and lower geared wheel (4a) which is coaxially fastened to the ingredient shaft (115). The teeth of the lower geared wheel (4a) and upper geared wheel (4b) have a slanted form. Thus, the lower geared wheel (4a) and upper geared wheel (4b) interlock only if the rotation is in one direction. For example, when the upper geared wheel (4b) rotates clockwise the lower geared wheel (4a) also rotates in the same direction, and when the upper geared wheel (4b) rotates anticlockwise the lower geared wheel (4a) does not move because interlocking between the teeth is not provided. The interlocking direction of the geared wheel (4) may as well be anticlockwise. When the upper geared wheel (4b) slips from the lower geared wheel (4a), the upper geared wheel (4b) and lower geared wheel (4a) can move upwards and downwards respectively on the axis of the ingredient shaft (115). Consequently, for example while the motor (3) rotates clockwise, interlocking between the lower geared wheel (4a) which is fastened to the ingredient shaft (115) and the upper geared wheel (4b) in the reducer (15) is provided and the ingredient shaft (115) starts to rotate clockwise as well. On the other hand, when the motor (3) rotates anticlockwise, interlocking between lower geared wheel (4a) and upper geared wheel (4b) is not provided and the ingredient shaft (115) does not rotate. Interlocking between the lower geared wheel (4a) and upper geared wheel (4b) may as well be provided anticlockwise.

The ventilation pipe (5) provides suction and discharge of the steam and gases generated while the ingredients are cooked in the cooking chamber (2). In the preferred embodiment of the invention the ventilation pipe (5) is an elastic pipe and its interlocking with the food preparation device (1) can be removed, if and when desired. The ventilation pipe (5) may preferably be fastened to the food preparation device (1) with a magnetic interlocking. In another embodiment of the invention at least one moisture sensor and/or at least one temperature sensor (10) is placed into the ventilation pipe (5).

The fan (6) is preferably placed in the ventilation pipe (5) and helps the steam and gases be suctioned from the food preparation device (1). By putting a filter to the fan exit the gases can be discharged into the external environment. In the preferred embodiment of the invention the speed of the fan (6) is adjusted by the control unit according to data obtained from a moisture sensor placed into the ventilation pipe (5) and/or the temperature sensor on the condensation surface.

The liquid storage (7) provides storing of the liquids to be used during cooking. The liquid storage (7) comprises at least one compartment. The liquid storage (7) may as well comprise multiple compartments and provide storing of different liquids. In the preferred embodiment of the invention the base of the liquid storage (7) is slanted towards the liquid inlet valve (8).

In another embodiment of the invention in addition to the liquid storage (7) or instead of the liquid storage (7) a connection is made to the waterworks and/or another liquid system and water and/or liquid is taken from the waterworks/system/fixture. In case water/liquid is provided from a fixture, one end of the intermediate connection elements which provide water/liquid transfer between the water/liquid fixture and cooking chamber is interlocked to the fixture and the other end to the liquid inlet valve (8).

In the preferred embodiment of the invention, by attaching a heating coil to the liquid storage (7) or the element providing the connection between the water fixture and liquid inlet valve (8), the temperature of the liquid to be taken to the cooking chamber (2) is brought to any desired level.

The liquid inlet valve (8) provides the liquids in the liquid storage (7) be taken to the cooking chamber (2). When the main blade (112) or any one or more secondary blades (113) are aligned with the liquid inlet valve (8), liquid inlet valve (8) is opened and liquid flow is provided from the liquid storage (7) to the cooking chamber (2). The control unit determines the amount of liquid needed to be taken to cooking chamber (2) by adjusting the time main blade (112) or secondary blade (113) shall stay aligned with the liquid inlet valve (8).

The liquid inlet valve (8) may be mechanical or magnetic, which shall be opened and/or closed by the control unit (16) via an electrovalve upon detection by the limit sensor (9) when main blade (112) and/or secondary blade (113) is aligned. The only difference between magnetic valves and pressure valves is that the head is magnetic instead of being dished (pressure compliant) and it does not come into contact with the blades (112, 113).

In the preferred embodiment of the invention liquid inlet valve (8) is a mechanical system and works with pressure. The mechanical liquid inlet valve (8) comprises a liquid valve case (81), a movable shaft (82) in the middle of the liquid valve case (81), at one end of the shaft (82) a dished valve pressure head (83), at the other end a sealing gasket (84), a washer support (85) holding the sealing gasket (84), and a spring (86) in order that the sealing gasket (84) applies pressure to the liquid valve case (81) and provides sealing. By means of a nick, the main blade (112) and/or at least one of the secondary blades (113), when aligned with the liquid inlet valve (8) presses the pressure head (83) of the liquid inlet valve (8), stretches the spring (86) which in turn pulls the sealing gasket (84) and thus the liquid in the liquid storage (7) flows out. When the ingredient blade is unaligned with mechanical the liquid inlet valve (8), liquid inlet valve (8) is returned to its initial position with the effect of the spring (86), the sealing gasket (84) applies pressure to the liquid valve case (81) and cuts off the liquid outflow. The mechanical liquid inlet valve (8) moves according to whether the coming main blade (112) or secondary blade (113) presses the valve pressure head (83) or not. If there is no nick on the coming main blade (112) or secondary blade (113) the valve maintains its position and there is no liquid flow.

In another embodiment of the invention a magnetic head (83a) is used in the mechanical liquid inlet valve (8) instead of the valve pressure head (83). In this embodiment on the edges of the main blade (112) and/or at least one of the secondary blades (113) aligned with the liquid inlet valve (8) there is a magnet. When the main blade (112) or secondary blade (113) is aligned with the liquid inlet valve (8), if the sides of the magnet on the main blade (112) or secondary blade (113) and the magnet of the magnetic head (83a) have the same magnetic pole, the magnetic head (83a) is pushed by the magnet on the main blade (112) or secondary blade (113), the shaft (82) is pushed forward and liquid outflow is provided when the sealing gasket (84) is separated from the valve case (81). When the main blade (112) or secondary blade (113) is unaligned from the liquid inlet valve (8), the shaft (82) in the middle of the liquid inlet valve (8) is returned to its initial position and provides the sealing gasket (84) apply pressure to the liquid valve case (81) and the liquid flow is removed. In case the main blade (112) or secondary blade (113) is aligned with the liquid inlet valve (8) which has a magnet with the opposite pole, the magnetic head (83a) would not move because sealing gasket (84) would be leaning against the liquid valve case (81). In another embodiment of the invention the magnetic liquid inlet valve (8) is activated when the main blade (112) or secondary blade (113) with the opposite pole is aligned with the magnetic head (83a).

In another embodiment of the invention the liquid inlet valve (8) is an electrovalve available on the market which works electrically. The liquid inlet valve (8) in the form of an electrovalve may be opened or closed by the control unit according to data obtained from at least one switch activated by the main blade (112) and/or secondary blades (113).

In the automatic food preparation device (1) which is the subject of the invention, the limit sensor (9) comprises,
- A primary contact point (91),
- A secondary contact point (92),
- At least one switch rod which moves between the primary contact point (91) and secondary contact point (92) and gets into contact with the primary contact point (91) and secondary contact point (92) and when in idle state does not get into contact with either the primary contact point (91) or secondary contact point (92) and
- At least one magnetic element (94) located on the end of the switch rod (93) close to the primary contact point (91) and secondary contact point (92) which provides the switch rod (93) get into contact with the primary contact point (91) or secondary contact point (92) according to the magnetic attraction or repulsion force generated in the environment.

There is at least one magnetic element (94) on the end of the switch rod (93) close to the primary contact point (91) and secondary contact point (92) in the limit sensor (9). In the preferred embodiment of the invention the magnetic element (94) is a magnet with two poles. In this embodiment while the first pole of the magnetic element (94) faces the primary contact point (91) the second pole of the magnetic element (94) faces the secondary contact point (92). Therefore, for example when to the first pole of the magnetic element (94) the same pole of a magnet with the first pole is approached, the magnetic element (94) moves away from the magnet towards the secondary contact point (92) and the switch rod (93) gets into contact with the secondary contact point (92). If to the first pole of the magnetic element (94) the pole of a magnet opposite from the first pole is approached, the magnetic element (94) approaches the magnet and moves towards the primary contact point (91) and the switch rod (93) gets into contact with the primary contact point (91). The control unit determines whether the switch rod (93) gets into contact with the primary contact point (91) or secondary contact point (92) by passing an electric current through the switch rod (93).

On the sides of the main blade (112) and secondary blades (113) facing the condensation surface (133) there is a magnet. The same poles of all the magnets over the secondary blades (113) face the condensation surface (133). The pole of the magnet over the main blade (112) opposite from those over the secondary blades (113) faces the condensation surface (133). In other words, either S pole of all the magnets on the secondary blades (113) face the condensation surface (133) and N pole of the magnet on the main blade (112) faces the condensation surface (133) or N pole of all the magnets on the secondary blades (113) face the condensation surface (133) and S pole of the magnet on the main blade (112) faces the condensation surface (133). Thus, the limit Sensor (9) transmits data to the control unit pertaining to whether the main blade (112) or a secondary blade (113) is approaching.

In another embodiment of the invention, ready magnetic sensors (such as hall effect sensor) or mechanical switches are used as a limit Sensor (9).

The temperature sensor (10) is used for measuring the temperature of the ingredients in the cooking chamber (2). In the preferred embodiment of the invention the temperature sensor (10) is mounted inside the cooking chamber (2) to elements such as the mixing blade (121), mixing shaft (122), or CDS (14). However, in other embodiments of the invention the temperature sensor can also be mounted outside the cooking chamber (2). In cases where the temperature sensor (10) is mounted outside the cooking chamber (2), the heat conductivity resistance of the cooking chamber (2) is calculated and a heat exchange correlation between the exterior and the interior of the cooking chamber (2) is obtained and according to this correlation the temperature value of the interior of the cooking chamber (2) is calculated by the control unit by taking into account the delays in data obtained from the temperature sensors (10) as well. In another embodiment of the invention there are temperature sensors (10) both inside and outside the cooking chamber (2). In another embodiment of the invention there is at least one temperature sensor (10) on the condensation surface (133).

The control unit performs the necessary scenario such as shutting down the system, dispensing the next ingredient according to data obtained from the temperature sensor (10) without waiting for the temperature of the cooking chamber (2) reach high values in respect to the operation, for example while boiling the temperature of the cooking chamber (2) exceed 100 degrees centigrade, while roasting onions or tomato paste 85 degrees centigrade, while frying 190 degrees centigrade.

The ingredient inlet unit (11) is located right over the cooking chamber (2) and is interlocked with the cooking chamber (2) with a locking system. The ingredient inlet unit (11) may be interlocked with the cooking chamber (2) in an airtight or air leaking way. In the ingredient inlet unit (11) the ingredients to be used during cooking are placed into the ingredient chamber (111). In the preferred embodiment of the invention in order to prevent the ingredients from directly getting into contact with the ingredient chamber (111), at least part of the interior of the ingredient chamber (111) is coated by a heat insulative material which is harmless healthwise, such as silicon.

In the ingredient inlet unit (11) the main blade (112) and secondary blades (113) segregate the ingredients placed into the ingredient chamber (111) from one another. According to the number of ingredients to be used in the food, a main blade (112) and if multiple ingredients are to be used, at least one secondary blade (113) is used and cells (111a) are formed within the ingredient chamber (111) whereto the ingredients are placed.

In the ingredient inlet unit (11), the ingredient inlet opening (114) is preferably located on the base of the ingredient chamber (111) and provides the ingredients placed into the cells (111a) be dispensed into the cooking chamber (2).

In the ingredient inlet unit (11), the main blade (112) and secondary blades (113) are fastened to the ingredient shaft (115). The main blade (112) and secondary blades (113) may be attached to and detached from the ingredient shaft (115). Thus, any number of blades desired (112, 113) may be attached to the ingredient shaft (115). The interlocking of the main blade (112) and secondary blades (113) with the ingredient shaft (115) may be provided in any way, such as a spring structure and/or sliding structure and/or screwed structure in the conventional applications of the technique. In the preferred embodiment of the invention the ingredient shaft (115) is in the form of a hollow cylinder. One end of the ingredient shaft (115) is fastened to the lower geared wheel (4a), concentric with the lower geared wheel (4a). The end of the ingredient shaft (115) not fastened to the lower geared wheel (4a) is bedded preferably to the center on the base of the ingredient chamber (111) with such tightness as to allow the ingredient shaft (115) rotate around its own axis. When the motor (3) and consequentially the reducer (15) shaft starts to rotate, the upper geared wheel (4b) fastened to the reducer (15) shaft also starts to rotate.

If the rotation direction of the upper geared wheel (4b) is in the direction which provides interlocking between the upper geared wheel (4b) and lower geared wheel (4a), the lower geared wheel (4a) also starts to rotate in the same direction with the upper geared wheel (4b). The lower geared wheel (4a) starting to rotate provides the ingredient shaft (115) fastened to the lower geared wheel (4a) also rotate. The main blade (112) and secondary blades (113) which start to rotate together with the ingredient shaft (115), start to drag the ingredients placed into the cells (111a) on the base of the ingredient chamber (111). When the cells (111a) come over the ingredient inlet opening (114) which is on the base of the ingredient chamber (111), the ingredients in the cell (111a) are dispensed into the cooking chamber (2) through the ingredient inlet opening (114).

The limit Sensor (9) is aligned with the magnets on the main blade (112) and secondary blades (113) and is preferably located on the side of the actuated gas control system (13) not facing the ingredient chamber (111), such as the lid of the automatic food preparation device (1).

When the secondary blades (113) pass by the limit Sensor (9) they push the magnetic element (94) on the switch rod (93) and provide the switch rod (93) get in contact with the primary contact point (91). When the main blade (112) passes by the limit Sensor (9), it pulls the magnetic element (94) on the switch rod (93) and provides the switch rod (93) get in contact with the secondary contact point (92). When a secondary blade (113) passes by the limit Sensor (9) it rotates the motor (3) in the direction which does not provide interlocking between the lower geared wheel (4a) and upper geared wheel (4b). The upper geared wheel (4b) slides over the lower geared wheel (4a), moves up and down both in the direction of the rotation and the ingredient shaft (115), and slips. The upper geared wheel (4b) has two levels of freedom as rotation and movement upwards. Therefore, the ingredient shaft (115) and thus the main blade (112) and secondary blades (113) do not move, only the mixing shaft (122) rotates. The control unit which operates according to data obtained from the temperature sensor (10) in the cooking chamber (2), starts to rotate the motor in the direction which provides interlocking between the lower geared wheel (4a) and upper geared wheel (4b) after the ingredients in the cooking chamber (2) reach a certain temperature and together with the ingredient shaft (115), the main blade (112) and secondary blades (113) start to rotate. The rotation in the direction which provides interlocking between the lower geared wheel (4a) and upper geared wheel (4b) continues until next secondary blade (113) is aligned with the limit sensor (9). The rotation of the main blade (112) and secondary blades (113) provides one of the ingredients placed in the cells (111a) be dispensed into the cooking chamber (2) through the ingredient inlet opening (114). When the next secondary blade (113) is aligned with the limit sensor (9), the control unit starts to rotate the motor (3) again in the direction which does not provide interlocking between the lower geared wheel (4a) and upper geared wheel (4b). The same operations by the control unit continue until the main blade (112) is aligned with the limit sensor (9). When the main blade (112) is aligned with the limit sensor (9), the control unit determines that all the ingredients placed into the cells (111a) have been dispensed into the cooking chamber (2).

The mixing shaft (122) in the mixing unit (12) reaches the cooking chamber (2) preferably passing through the hollow ingredient shaft (115). One end of the mixing shaft (122) is interlocked with the reducer (15) shaft and the other end with the mixing blades (121) in the cooking chamber (2). The end of the mixing shaft (122) interlocked with the mixing blades (121) is preferably bedded to the center on the base of the cooking chamber (2).

The mixing blades (121) provide the ingredients in the cooking chamber (2) intermix and prevent the ingredients from sticking to the base of the cooking chamber (2). Since the mixing shaft (122) is interlocked with the reducer (15) without a geared wheel (4), whatever direction the motor (3) and reducer (15) rotates, the mixing shaft (122) also rotates in the same direction with the motor (3) and reducer (15). In the section of the mixing shaft (122) which stays in the cooking chamber (2) there is at least one consistency detection panel (123). While the mixing shaft (122) rotates, the consistency detection panel (123) also rotates. While the consistency detection panel (123) rotates in the food in the cooking chamber (2), a force is generated over the consistency detection panel (123) derived from the viscosity of the food. This force generated over the consistency detection panel (123) is in the opposite direction of the rotation of the mixing shaft (122) and thus the reducer (15) and motor (3). When the consistency of the food increases, its viscosity also increases and the force generated over the consistency detection panel (123) increases as well. The force applied in the opposite direction of the motor's (3) rotation causes the motor (3) use more power and the amperage of the electric current passing through the motor (3) increase. The control unit constantly controls the current passing through the motor (3) and in case the current increases, it provides the liquid be taken into the cooking chamber (2) or ends the cooking operation. In another embodiment of the invention, the force applied by the food to the consistency detection panel (123) is measured by a force detection sensor. The control unit may decide that the liquid shall be taken into the cooking chamber (2) or the cooking operation shall be ended according to the size of the force measured by the force sensor based on the force value equaling the desired consistency value. The consistency detection panel (123) may be a plane as well as a surface with grooves and bumps.

In the preferred embodiments of the invention the mixing blades (121) are made of an elastic material. Thus, in case any ingredient gets stuck in between the mixing blade (121) and cooking chamber (2), the mixing blade (121) may yield and pass over the ingredient without crushing it. In the preferred embodiment of the investment, on the edges of the mixing blade (121) there is at least one sweeper ridge, preferably elastic, which sweeps the side walls of the cooking chamber (2).

The gas control system (13) provides the steam and gases generated in the cooking chamber (2) be discharged or returned to the cooking chamber (2) after being condensed. The steam and gases generated in the cooking chamber (2) pass through the ingredient inlet opening (114) on the base of the ingredient chamber (111) and enter the ingredient chamber (111). According to the cooking operation and/or the steam and gases generated in the cooking chamber (2) and/or temperature sensor on the condensation surface, the power of the fan (6) is altered by the control unit (16) and the gas suction is either increased or decreased. The steam valve (131) on the ceiling of the ingredient chamber (111) is kept open in cases such as roasting, where the steam and gases generated in the cooking chamber (2) should be discharged. The steam valve (131) may be opened or closed mechanically as well as be opened or closed with an electrovalve.

The ventilation opening (132) is preferably located on the ceiling of the ingredient chamber (111) and allows a certain amount of gas be discharged in case of high pressures which may be generated in the cooking chamber (2) during cooking. The ventilation opening (132) allows controlled discharge of the gas in the cooking chamber (2). In another embodiment of the invention, in cases where the steam valve (131) is closed, the automatic food preparation device (1) becomes a pressure vessel, such as a pressure cooker and the ventilation opening (132) can function as a security valve. In another embodiment of the invention the ventilation opening (132) is convoluted or helical. In this embodiment the ventilation opening (132) helps the steam be condensed which can not be condensed on the condensation surface (133).

In cases where the steam and gases generated during cooking need to be kept in the cooking chamber (2) or be condensed and reliquefied, the steam valve (131) is kept closed. While the steam valve (131) is kept closed, gas discharge to the external environment is provided only from the ventilation opening (132).

The steam valve (131) is moved with the help of a cam concentric with the lower geared wheel (4a) and ingredient shaft (122) and according to the rotation amount of the ingredient shaft (122) it is opened or closed. In another embodiment of the invention the steam valve (131) is opened or closed by the control unit according to data obtained from the limit sensors (9).

The condensation surface (133) functions as the lid of the ingredient chamber (111). When the steam valve (131) is closed, the steam generated in the cooking chamber (2) rises through the ingredient inlet opening (114), it firstly enters the ingredient chamber (111) and then gets into contact with the condensation surface (133). Because the condensation surface (133) is colder than the steam generated while cooking, the steam which gets into contact with the condensation surface (133) condenses and liquefies and is returned to the cooking chamber (2).

The interlocking rim (134), which is preferably located on the side of the condensation surface (133) which does not face the ingredient chamber (111), provides the ventilation pipe (5) be fastened to the side of the condensation surface (133) which does not face the ingredient chamber (111).

The cooling window (135) is preferably located on the interlocking rim (134). While the steam valve (131) is closed and/or steam and gas suction is made from the cooking chamber (2), the cooling window (135) provides air suction be made from the external environment through the ventilation pipe (5) and the air suctioned from the outside gets into contact with the side of the condensation surface (133) which does not face the ingredient chamber (111) and cools the condensation surface (133).

The automatic food preparation device (1), which is the subject of the invention, comprises the following which detect whether the food is cooked or not,
- At least one lower housing (141) whereto a sample of the ingredient used for cooking which is expected to be cooked latest is placed,
- at least one upper housing (142) sealed over the lower housing (141),
- at least one pressure element (143) which provides pressure be applied to the ingredient placed between the lower housing (141) and upper housing (142),
- at least one secondary shaft opening (148) located at the bottom of the lower housing (141) through which the pressure element (143) may pass,
- at least one cooking pressure detection sensor (14) located on the base of the cooking chamber (2) which has a diameter at least at the same size with the diameter of the pressure element (143) and which comprises at least one groove.

In the preferred embodiment of the invention the pressure element (143) is pushed towards the food ingredient by means of a spring (144). In this embodiment the spring (144) applies pressure to the spring support (145) which is fastened to the pressure element (143) and pushes the pressure element (143) towards the food ingredient. The cooking pressure detection sensor (14) is preferably interlocked with the mixing shaft (122) and rotates together with the mixing shaft (122). In the cooking pressure detection sensor (14), a sample of the ingredient used for cooking which is expected to be cooked latest is placed into the lower housing (141). In the preferred embodiment of the invention, there is at least one protective layer (146) which prevents the food ingredient from getting into direct contact with the lower housing (141) and/or upper housing (142). In the protective layer (146) there is at least one primary shaft opening (147) through which the pressure element (143) may pass.

The upper housing (142) is placed over the lower housing (141). The lower housing (141) and upper housing (142) preferably have a screwed structure and are fastened to eachother by means of their screwed structure. The lower housing (141) and upper housing (142) each comprise scale. The lower housing (141) and upper housing (142) may be approached eachother in any desired amount. Because the lower housing (141) and upper housing (142) being approached eachother too much would increase the pressure and force generated over the ingredient, the pressure element (143) perforates the ingredient sample more quickly and transmits data to the information that the food is cooked. Thus it is provided that the food can be cooked as much as desired. In the preferred embodiment of the invention there is at least one liquid channel which allows liquid inflow on both the lower housing (141) and upper housing (142).

The pressure element (143) is located in between the lower housing (141) and upper housing (142). One end of the pressure element (143) gets into contact with the ingredient sample placed into the lower housing (141). On the end of the pressure element (143) which does not get into contact with the ingredient sample, there is preferably at least one spring support (145). In between the spring support (145) and upper housing (142) there is at least one spring (144). While the upper housing (142) is screwed and fastened to the lower housing (141), the spring (144) is compressed. The compressed spring (144) pushes the spring support (145) and pressure element (143) fastened to the spring support (145) towards the ingredient sample in the lower housing (141). As the food is cooked the ingredient sample softens and after a while, the pressure element (143) pushed by the spring (144) towards the ingredient sample perforates the ingredient sample. The ingredient sample becoming so soft as it can be perforated, means that the food is sufficiently cooked. After the pressure element (143) perforates the food ingredient sample, it passes through the primary shaft opening (147) in the protective layer (146) and the secondary shaft opening (148) at the bottom of the lower housing 141) and then gets into contact with the base of the cooking chamber (2). While the pressure element (143) is in contact with the base of the cooking chamber (2), the mixing shaft (122) and consequently the pressure cooking system (14) continue to rotate. When the pressure element (143) comes over the groove on the cooking chamber (2) it jams in the groove and hinders the rotation of CDS (14) and mixing shaft (122). In another embodiment of the invention one side of the groove has a slanted form and by virtue of this it hinders the rotation in only one direction. In other embodiments of the invention the groove may hinder the rotation in both directions. The mixing shaft (122) being hindered from rotating, hinders also the rotation of the motor (3) which is mechanically interlocked with the mixing shaft (122). The motor (3) the rotation of which is hindered draws current in high amounts. The control unit (16) detects the high amount of current drawn by the motor (3) and ends the cooking operation. In another embodiment of the invention, the pressure element (143) activates a switch after perforating the ingredient sample and transmits data to the information to the control unit that the food is cooked. The control unit evaluates data obtained from units like the temperature sensor (10), limit sensor (9), CDS (14) and alters the working conditions of the motor (3), provides new ingredients be dispensed into the cooking chamber (2) and/or performs operations such as ending the cooking operation. In the preferred embodiment of the invention, the control unit adjusts the amount of heat provided by a heater, such as a stove or oven which heats the cooking chamber (2).

In another embodiment of the invention, the control unit adjusts the working conditions of the heater, fan (6), gas control system (13), motor (3), ingredient inlet unit (11) and mixing unit (12) according to the temperature of the ingredients in the cooking chamber (2). In this embodiment, when the temperature of the ingredients approaches the desired temperatures, the control unit may decrease the power of the heat source in order to decrease the amount of heat entering the cooking chamber (2), it may provide the liquid and/or ingredient be dispensed into the cooking chamber (2) and perform similar operations.

The frying and boiling basket (17) is attached to the mixing shaft (122), concentric with the mixing shaft (122). The frying and boiling basket (17) can move upwards and downwards in the cooking chamber (2). Before the frying or boiling operation is started, the frying and boiling basket (17) is located in the upper section of the cooking chamber (2) and is not in contact with the liquid in the cooking chamber (2) such as oil or water. When the liquid in the cooking chamber (2) approaches the boiling temperature or reaches the desired temperature, the frying and boiling basket (17) is lowered and inserted into the heated liquid in the cooking chamber (2). The temperature of the liquid in the cooking chamber (2) is measured by the temperature sensor (10). The liquid in the cooking chamber (2) enters through the holes and openings on the frying and boiling basket (17), gets into contact with the food material and the frying or boiling operation starts. The control unit determines that the frying or boiling operation is over according to data detected by CDS (14) and/or the humidity sensor and/or temperature sensor (10) in the ventilation pipe (5). When the frying or boiling operation is over, the frying and boiling basket (17) moves upwards on the mixing shaft (122) and its contact with the hot liquid in the cooking chamber (2) is removed. In another embodiment of the invention the frying and boiling basket (17) is elastic and when it is lowered to the bottom of the cooking chamber (2), it yields and provides better mixing of the ingredients being fried or boiled.

Various embodiments of the automatic food preparation device (1) which is the subject of the invention is possible and the scope of the invention cannot be limited to the examples described herein, it is according to the claims.

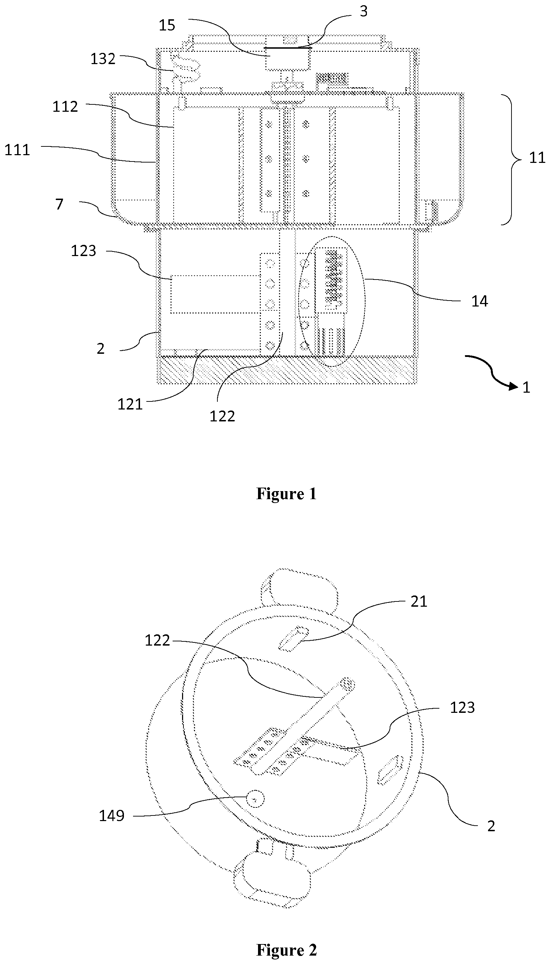

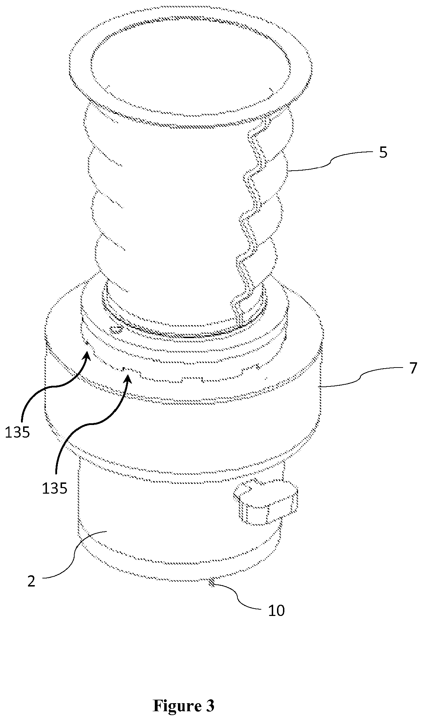

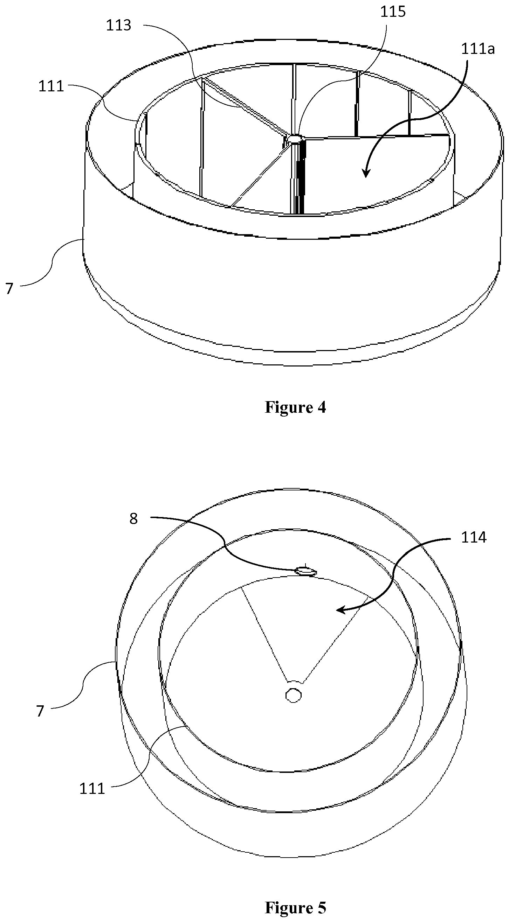

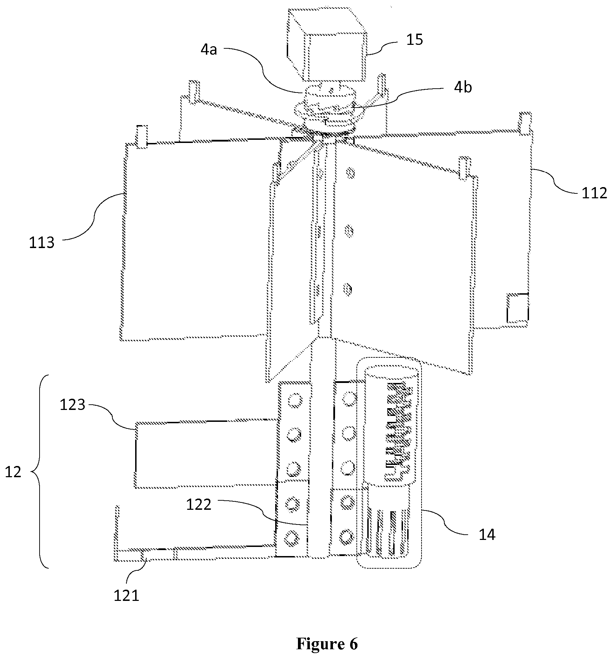

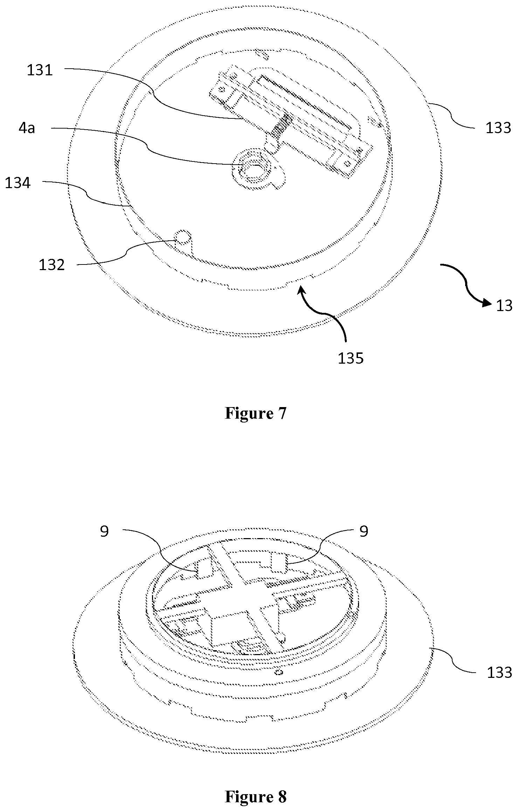

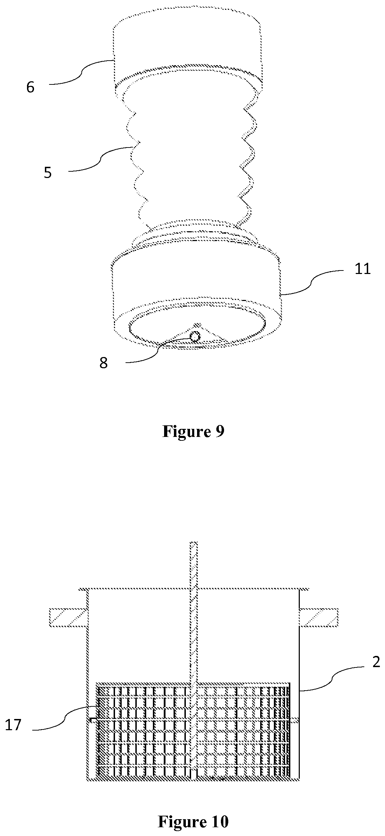

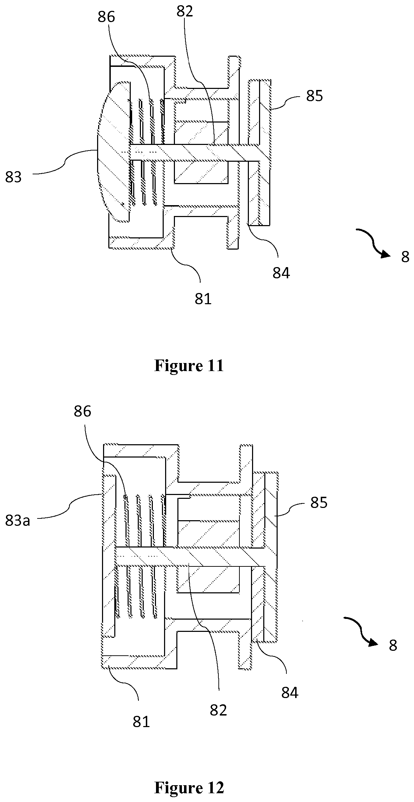

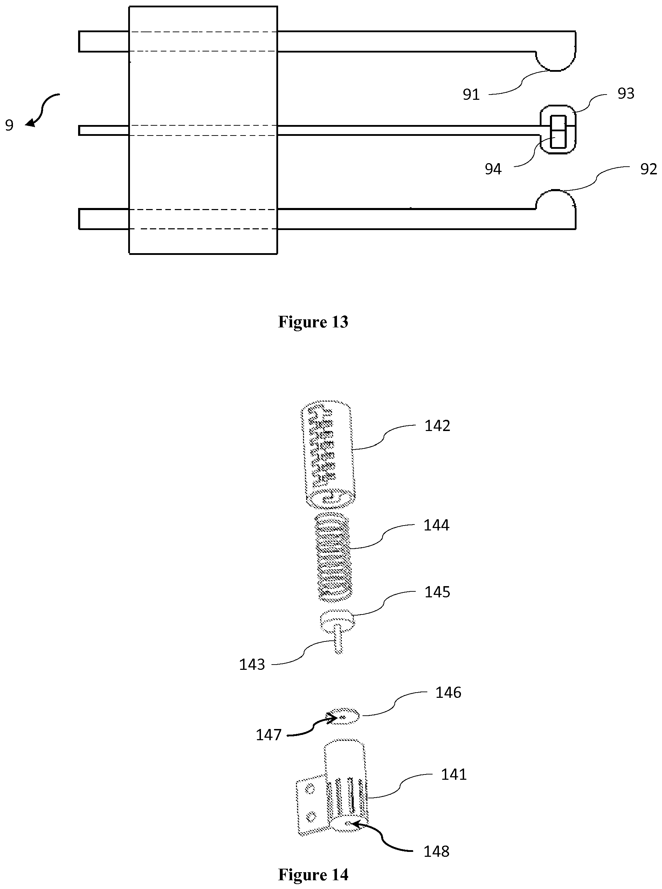

## Claims

1. An automatic food preparation device (1) **comprising;**
- at least one cooking chamber (2),
- at least one motor (3),
- at least one reducer (15) that alters the torque and speed rates generated in the motor (3),
- at least one geared wheel (4) which provides unidirectional power transfer,
- at least one limit sensor (9),
- at least one temperature sensor (10),
- at least one ingredient inlet unit (11) where the food ingredients are kept and which provides the same be successively dispensed into the cooking chamber, said ingredient inlet unit (11) having at least one ingredient chamber (111) where the ingredients are placed into,
- at least one main blade (112) which provides detection of the location of the ingredients in the ingredient inlet unit (11),
- at least one secondary blade (113) which provides the ingredients be kept segregated from one another in the ingredient chamber (111),
- at least one ingredient inlet opening (114) which provides the ingredients be dispensed from the ingredient inlet unit (11) into the cooking chamber (2),
- at least one ingredient shaft (115) where the main blade (112) and secondary blades (113) are fastened, which provides the main blade (112) and secondary blades (113) be rotated.
- at least one mixing unit (12) which provides the ingredients in the cooking chamber (2) be mixed,
- at least one mixing blade (121) which provides the ingredients in the cooking chamber (2) be intermixed by hitting the ingredients,
- at least one mixing shaft (122) whereto the mixing blades (121) are attached, which provides the mixing blades (121) be rotated in the cooking chamber (2) and **characterized in that;**
- at least one gas control system (13) which provides the gases and/or steam generated during cooking be discharged from the cooking chamber (2) and/or be returned to the cooking chamber (2) after being condensed,
- at least one steam valve (131) which provides the gases generated in the cooking chamber (2) be kept in the cooking chamber (2),
- at least one condensation surface (133) which provides the steam generated in the cooking chamber (2) while cooking be condensed and returned to the cooking chamber (2),
- at least one cooling window (135) which provides air suction be made from the external environment and the condensation surface (133) be cooled by the air sucked from outside contacting the condensation surface (133), and
- at least one control unit which controls elements such as the motor (3) and liquid inlet valve (8) after evaluating data obtained from the temperature sensor (10).

2. An automatic food preparation device (1) according to claim 1 **characterized by** at least one liquid storage (7) where liquids such as water, milk, oil are stored, and at least one liquid inlet valve (8) which provides the liquid in the liquid storage (7) be taken into the cooking chamber (2).

3. An automatic food preparation device (1) according to claim 1 **characterized by** a limit sensor (9) informing the control unit whether a main blade (112) or secondary blade (113) is approaching.

4. An automatic food preparation device (1) according to claim 1 wherein the device (1) further comprises a cooking detection system (14) in the cooking chamber (2) and said temperature sensor (10) is mounted inside the cooking chamber (2) to at least one of the elements selected from mixing blade (121), mixing shaft (122) or cooking detection system (14).

5. An automatic food preparation device (1) according to any one of the aforementioned claims **characterized by** an ingredient shaft (115) which rotates with the rotation of the motor (3) in one direction but does not rotate with the rotation of the motor (3) in the other direction.

6. An automatic food preparation device (1) according to any one of the aforementioned claims **characterized by** a consistency detection panel (123) which rotates together with the mixing shaft (122).

7. An automatic food preparation device (1) according to any one of the aforementioned claims **characterized by** a cooking pressure detection sensor (14) which detects whether the food is cooked or not, comprising
- at least one lower housing (141) whereto a sample of the ingredient used for cooking which is expected to be cooked latest is placed,
- at least one upper housing (142) sealed over the lower housing (141),
- at least one pressure element (143) which provides pressure be applied to the ingredient placed between the lower housing (141) and upper housing (142),
- at least one secondary shaft opening (148) located at the bottom of the lower housing (141) through which the pressure element (143) may pass,
- at least one groove located on the base of the cooking chamber (2) and which has a diameter at least in the same size with the diameter of the pressure element (143).

8. An automatic food preparation device (1) according to any one of the aforementioned claims **characterized by** a frying and boiling basket (17) which can move upwards or downwards on the mixing shaft (122).

9. An automatic food preparation device (1) according to any one of the aforementioned claims **characterized by** at least one temperature sensor (10) located on the condensation surface (133).

10. An automatic food preparation device (1) according to any one of the aforementioned claims **characterized by** a control unit which adjusts the working conditions of one or more units including a heater, fan (6), gas control system (13), motor (3), ingredient inlet unit (11) and mixing unit (12), according to the temperature of the ingredients in the cooking chamber (2).

11. An automatic food preparation device (1) according to claim 1 **characterized by** a control unit which ends the cooking operation or provides the liquid and/or ingredient be dispensed into the cooking chamber (2) according to the size of the current passing through the motor (3).

## Patentansprüche

1. Eine automatische Lebensmittelzubereitungsvorrichtung (1), **umfassend;**
- mindestens eine Kochkammer (2),
- mindestens einen Motor (3),
- mindestens ein Untersetzungsgetriebe (15), das die im Motor (3) erzeugten Drehmoment- und Drehzahlraten verändert,
- mindestens ein Getrieberad (4), das für eine unidirektionale Kraftübertragung sorgt,
- mindestens einen Grenzwertgeber (9),
- mindestens einen Temperatursensor (10),
- mindestens eine Zutateneinlasseinheit (11), in der die Lebensmittelzutaten aufbewahrt werden und die dafür sorgt, dass diese nacheinander in die Kochkammer abgegeben werden, wobei die Zutateneinlasseinheit (11) mindestens eine Zutatenkammer (111) aufweist, in die die Zutaten eingebracht werden,
- mindestens ein Hauptblatt (112), das die Erkennung der Lage der Zutaten in der Zutateneinlasseinheit (11) ermöglicht,
- mindestens ein Sekundärblatt (113), das dafür sorgt, dass die Zutaten in der Zutatenkammer (111) voneinander getrennt gehalten werden,
- mindestens eine Zutateneinlassöffnung (114), über die die Zutaten aus der Zutateneinlasseinheit (11) in die Kochkammer (2) abgegeben werden,
- mindestens eine Zutatenwelle (115), an der das Hauptblatt (112) und die Sekundärblätter (113) befestigt sind, wodurch die Hauptblätter (112) und die Sekundärblätter (113) gedreht werden können,
- mindestens eine Mischeinheit (12), die dafür sorgt, dass die Zutaten in der Kochkammer (2) gemischt werden,
- mindestens ein Mischblatt (121), die dafür sorgt, dass die Zutaten in der Kochkammer (2) durch Schlagen der Zutaten vermischt werden,
- mindestens eine Mischwelle (122), an der die Mischblätter (121) befestigt sind, die dafür sorgt, dass die Mischblätter (121) in die Kochkammer (2) gedreht werden können, und **gekennzeichnet durch**;
- mindestens ein Gassteuerungssystem (13), das dafür sorgt, dass die beim Kochen erzeugten Gase und/oder Dämpfe aus der Kochkammer (2) abgeleitet werden und/oder nach der Kondensation in die Kochkammer (2) zurückgeführt werden,
- mindestens ein Dampfventil (131), das dafür sorgt, dass die in der Kochkammer (2) erzeugten Gase in der Kochkammer (2) gehalten werden,
- mindestens eine Kondensationsfläche (133), die dafür sorgt, dass der beim Kochen in der Kochkammer (2) erzeugte Dampf kondensiert und in die Kochkammer (2) zurückgeführt wird,
- mindestens ein Kühlfenster (135), das dafür sorgt, dass die Luft aus der äußeren Umgebung angesaugt wird und die Kondensationsfläche (133) durch die von außen angesaugte Luft, die die Kondensationsfläche (133) berührt, gekühlt wird, und
- mindestens eine Steuereinheit, die Elemente wie den Motor (3) und das Flüssigkeitseinlassventil (8) nach Auswertung der vom Temperatursensor (10) erhaltenen Daten steuert.

2. Automatische Lebensmittelzubereitungsvorrichtung (1) nach Anspruch 1, **gekennzeichnet durch** mindestens einen Flüssigkeitsspeicher (7), in dem die Flüssigkeiten wie Wasser, Milch, Öl gespeichert werden, und mindestens ein Flüssigkeitseinlassventil (8), das dafür sorgt, dass die Flüssigkeit im Flüssigkeitsspeicher (7) in die Kochkammer (2) geleitet wird.

3. Automatische Lebensmittelzubereitungsvorrichtung (1) nach Anspruch 1, **gekennzeichnet durch** einen Grenzwertgeber (9), der der Steuereinheit mitteilt, ob sich ein Hauptblatt (112) oder ein Sekundärblatt (113) nähert.

4. Automatische Lebensmittelzubereitungsvorrichtung (1) nach Anspruch 1, wobei die Vorrichtung (1) ferner ein Kocherkennungssystem (14) in der Kochkammer (2) umfasst und der Temperatursensor (10) innerhalb der Kochkammer (2) an mindestens einem der Elemente, ausgewählt aus dem Mischblatt (121), der Mischwelle (122) oder dem Kocherkennungssystem (14), angebracht ist.

5. Automatische Lebensmittelzubereitungsvorrichtung (1) nach einem der vorstehenden Ansprüche, **gekennzeichnet durch** eine Zutatenwelle (115), die sich mit der Drehung des Motors (3) in einer Richtung dreht, sich aber nicht mit der Drehung des Motors (3) in der anderen Richtung dreht.

6. Automatische Lebensmittelzubereitungsvorrichtung (1) nach einem der vorstehenden Ansprüche, **gekennzeichnet durch** eine Konsistenzerkennungsplatte (123), die sich zusammen mit der Mischwelle (122) dreht.

7. Automatische Lebensmittelzubereitungsvorrichtung (1) nach einem der vorstehenden Ansprüche, **gekennzeichnet durch** einen Kochdruckerkennungssensor (14), der erkennt, ob das Lebensmittel gekocht wird oder nicht, umfassend
- mindestens ein unteres Gehäuse (141), in das eine Probe der zum Kochen verwendeten Zutat, die voraussichtlich zuletzt gekocht wird, eingelegt wird,
- mindestens ein oberes Gehäuse (142), das über dem unteren Gehäuse (141) abgedichtet ist,
- mindestens ein Druckelement (143), das dafür sorgt, dass der Druck auf die zwischen dem unteren Gehäuse (141) und dem oberen Gehäuse (142) befindliche Zutat ausgeübt wird,
- mindestens eine sekundäre Wellenöffnung (148), die sich am Boden des unteren Gehäuses (141) befindet und durch die das Druckelement (143) hindurchgeführt werden kann,
- mindestens eine Rille, die sich am Boden der Kochkammer (2) befindet und deren Durchmesser mindestens gleich groß ist wie der Durchmesser des Druckelements (143).

8. Automatische Lebensmittelzubereitungsvorrichtung (1) nach einem der vorstehenden Ansprüche, **gekennzeichnet durch** einen Brat- und Siedekorb (17), der auf der Mischwelle (122) aufwärts oder abwärts bewegt werden kann.

9. Automatische Lebensmittelzubereitungsvorrichtung (1) nach einem der vorstehenden Ansprüche, **gekennzeichnet durch** mindestens einen Temperatursensor (10), der auf der Kondensationsfläche (133) angeordnet ist.

10. Automatische Lebensmittelzubereitungsvorrichtung (1) nach einem der vorstehenden Ansprüche, **gekennzeichnet durch** eine Steuereinheit, die die Arbeitsbedingungen einer oder mehrerer Einheiten, einschließlich einer Heizung, eines Gebläses (6), eines Gasregelsystems (13), eines Motors (3), einer Zutateneinlasseinheit (11) und einer Mischeinheit (12), entsprechend der Temperatur der Zutaten in der Kochkammer (2) einstellt.

11. Automatische Lebensmittelzubereitungsvorrichtung (1) nach Anspruch 1, **gekennzeichnet durch** eine Steuereinheit, die in Abhängigkeit von der Größe des durch den Motor (3) fließenden Stroms den Kochvorgang beendet oder die Flüssigkeit und/oder Zutat in die Kochkammer (2) abgibt.

## Revendications

1. Dispositif automatique de préparation d'aliments (1) comprenant ;
- au moins une chambre de cuisson (2),
- au moins un moteur (3),
- au moins un réducteur (15) qui change les taux de couple ou de vitesse générés dans le moteur (3),
- au moins une roue dentée (4) qui assure le transfert de puissance unidirectionnel,
- au moins un capteur de limite (9),
- au moins un capteur de température (10),
- au moins une unité d'entrée d'ingrédients (11), où les ingrédients alimentaires sont conservés et qui permet de les distribuer efficacement dans la chambre de cuisson, ladite unité d'entrée d'ingrédients (11) présentant au moins une chambre d'ingrédients (111) dans laquelle les ingrédients sont placés,
- au moins une lame principale (112) qui assure la détection de l'emplacement des ingrédients dans l'unité d'entrée d'ingrédients (11),
- au moins une lame secondaire (113) qui permet de maintenir les ingrédients séparés les uns des autres dans la chambre d'ingrédients (111),
- au moins une ouverture d'entrée d'ingrédients (114) qui permet aux ingrédients d'être distribués depuis l'unité d'entrée d'ingrédients (11) à la chambre de cuisson (2),
- au moins un arbre d'ingrédients (115) où la lame principale (112) et les lames secondaires (113) sont fixées, ce qui permet à la lame principale (112) et aux lames secondaires (113) d'être tournées,
- au moins une unité de mélange (12) qui permet de mélanger les ingrédients dans la chambre de cuisson (2),
- au moins une lame de mélange (121) qui permet de mélanger les ingrédients dans la chambre de cuisson (2) en frappant les ingrédients,
- au moins un arbre de mélange (122) auquel les lames de mélange (121) sont fixées, ce qui permet aux lames de mélange (121) d'être tournés dans la chambre de cuisson (2) et **caractérisé en ce que** ;
- au moins un système de contrôle des gaz (13) qui permet aux gaz et/ou à la vapeur générés pendant la cuisson d'être évacués de la chambre de cuisson (2) et/ou d'être renvoyés dans la chambre de cuisson (2) après avoir été condensés,
- au moins une vanne de vapeur (131) qui permet de maintenir aux gaz générés dans la chambre de cuisson (2) d'être maintenues dans la chambre de cuisson (2),
- au moins une surface de condensation (133) qui permet à la vapeur générée dans la chambre de cuisson (2) pendant la cuisson d'être condensée et renvoyée dans la chambre de cuisson (2),
- au moins une fenêtre de refroidissement (135) qui permet de former l'aspiration d'air à partir de l'environnement extérieur et de refroidir la surface de condensation (133) par l'air aspiré de l'extérieur en contact avec la surface de condensation (133), et
- au moins une unité de contrôle qui contrôle des éléments tels que le moteur (3) et la vanne d'entrée de liquide (8) après avoir évalué les données obtenues à partir du capteur de température (10).

2. Dispositif automatique de préparation d'aliments (1) selon la revendication 1, **caractérisé par** au moins un stockage de liquide (7) où sont stockés des liquides tels que l'eau, le lait, l'huile, et au moins une vanne d'entrée de liquide (8) qui permet au liquide dans le stockage de liquide (7) d'être introduit dans la chambre de cuisson (2).

3. Dispositif automatique de préparation d'aliments (1) selon la revendication 1, **caractérisé par** un capteur de limite (9) informant l'unité de contrôle si une lame principale (112) ou une lame secondaire (113) s'approche.

4. Dispositif automatique de préparation d'aliments (1) selon la revendication 1, dans lequel le dispositif (1) comprend en outre un système de détection de cuisson (14) dans la chambre de cuisson (2) et ledit capteur de température (10) est monté à l'intérieur de la chambre de cuisson (2) à au moins l'un des éléments choisis parmi la lame de mélange (121), l'arbre de mélange (122) ou le système de détection de cuisson (14).

5. Dispositif automatique de préparation d'aliments (1) selon l'une quelconque des revendications précédentes, **caractérisé par** un arbre d'ingrédients (115) qui tourne avec la rotation du moteur (3) dans un sens, mais ne tourne pas avec la rotation du moteur (3) dans l'autre sens.

6. Dispositif automatique de préparation d'aliments (1) selon l'une quelconque des revendications précédentes, **caractérisé par** un panneau de détection de cohérence (123) qui tourne avec l'arbre de mélange (122).

7. Dispositif automatique de préparation d'aliments (1) selon l'une quelconque des revendications précédentes, **caractérisé par** un capteur de détection de pression de cuisson (14) qui détecte si l'aliment est cuit ou non, comprenant
- au moins un boîtier inférieur (141) à lequel est placé un échantillon de l'ingrédient utilisé pour la cuisson qui devrait être cuit le plus tard,
- au moins un boîtier supérieur (142) fermé de manière étanche sur le boîtier inférieur (141),
- au moins un élément de pression (143) qui permet d'appliquer la pression sur l'ingrédient placé entre le boîtier inférieur (141) et le boîtier supérieur (142),
- au moins une ouverture d'arbre secondaire (148) située au fond du boîtier inférieur (141) à travers laquelle peut passer l'élément de pression (143),
- au moins une rainure qui est située à la base de la chambre de cuisson (2) et qui a un diamètre au moins de la même taille que le diamètre de l'élément de pression (143).

8. Dispositif automatique de préparation d'aliments (1) selon l'une quelconque des revendications précédentes, **caractérisé par** un panier de friture et d'ébullition (17) qui peut se déplacer vers le haut ou vers le bas sur l'arbre de mélange (122).

9. Dispositif automatique de préparation d'aliments (1) selon l'une quelconque des revendications précédentes, **caractérisé par** au moins un capteur de température (10) situé sur la surface de condensation (133).

10. Dispositif automatique de préparation d'aliments (1) selon l'une quelconque des revendications précédentes, **caractérisé par** une unité de contrôle qui ajuste les conditions de fonctionnement d'une ou plusieurs unités comprenant un appareil de chauffage, un ventilateur (6), un système de contrôle de gaz (13), un moteur (3), une unité d'entrée d'ingrédients (11) et une unité de mélange (12), selon la température des ingrédients dans la chambre de cuisson (2).

11. Dispositif automatique de préparation d'aliments (1) selon la revendication 1, **caractérisé par** une unité de contrôle qui termine l'opération de cuisson ou permet au liquide et/ou à l'ingrédient d'être distribués dans la chambre de cuisson (2) selon la valeur du courant traversant le moteur. (3).
